# EUROPEAN PATENT SPECIFICATION

(11) **EP 2 990 696 B1**
(45) Date of publication and mention of the grant of the patent: **31.01.2018**
(21) Application number: 15174459.6
(22) Date of filing: 30.06.2015
(51) Int. Cl.: F16H 61/662, F16H 63/06, F16H 55/56

(54) **VEHICLE V-BELT CONTINUOUSLY VARIABLE TRANSMISSION**
STUFENLOS EINSTELLBARES FAHRZEUG-KEILRIEMENGETRIEBE
TRANSMISSION VARIABLE EN CONTINU À COURROIE TRAPÉZOÏDALE

(30) Priority: 06.08.2014 JP 2014160150
(43) Date of publication of application: 02.03.2016
(73) Proprietor: HONDA MOTOR CO., LTD., Tokyo 107-8556 (JP)
(72) Inventor: NEDACHI, Yoshiaki, Saitama, Saitama 351-0193 (JP); MORITA, Go, Saitama, Saitama 351-0193 (JP); KAKEMIZU, Kenichiro, Saitama, Saitama 351-0193 (JP); RYUZAKI, Tatsuya, Saitama, Saitama 351-0193 (JP)
(74) Representative: Quinterno, Giuseppe

(56) References cited:
- US-A1- 2002 155 909
- DATABASE WPI Week 201424 Thomson Scientific, London, GB; AN 2014-F45169 XP002753070, -& JP 2014 055649 A (HONDA MOTOR CO LTD) 27 March 2014 (2014-03-27)
- DATABASE WPI Week 201219 Thomson Scientific, London, GB; AN 2012-C88134 XP002753093, -& JP 2012 047292 A (HONDA GIKEN KOGYO KK) 8 March 2012 (2012-03-08)

## Description

The present invention relates to a vehicle V-belt continuously variable transmission including: a driving pulley that has a fixed sheave fixed to a drive shaft transmitted with power from an engine mounted on a vehicle, and a movable sheave supported on the drive shaft in order to be axially relatively moved and not to be relatively rotated and arranged oppositely to the fixed sheave; a driven pulley that is arranged to a driven shaft interlocked with and coupled to a drive wheel; a V-belt that is wound around the driving pulley and the driven pulley; an actuator that axially drives the movable sheave; and a control unit that controls actuation of the actuator.
JP-A No. 2012-225443 discloses the well-known V-belt continuously variable transmission that is configured to achieve shift transmission in a variable manner by axially driving a movable sheave of a driving pulley by an actuator.
In the V-belt continuously variable transmission disclosed in the above-mentioned JP-A No. 2012-225443, a moving range of a movable sheave in a driving pulley is set including a moving margin for preventing the movable sheave from being excessively pushed to a movable endmost part when the movable sheave is axially driven by an actuator. For this reason, a drive shaft provided with the driving pulley and a driven shaft provided with a driven pulley are required to be formed to have length including the margin, thereby causing an increase in size of the V-belt continuously variable transmission. In view of this, it has been required to address the above-mentioned problem. JP-A No. 2012-047292 discloses the combination of an actuator and a centrifugal shift mechanism. The present invention has been achieved under the above-mentioned circumstances, and an object of the present invention is to provide a vehicle V-belt continuously variable transmission that can be miniaturized.

In order to accomplish the above-mentioned object, according to the present invention, there is provided a vehicle V-belt continuously variable transmission including: a driving pulley that has a fixed sheave fixed to a drive shaft transmitted with power from an engine mounted on a vehicle, and a movable sheave supported on the drive shaft in order to be axially relatively moved and not to be relatively rotated and arranged oppositely to the fixed sheave; a driven pulley that is arranged to a driven shaft interlocked with and coupled to a drive wheel; a V-belt that is wound around the driving pulley and the driven pulley; an actuator that axially drives the movable sheave; and a control unit that controls actuation of the actuator. A centrifugal shift mechanism is annexed to the driving pulley, the centrifugal shift mechanism being configured to include a plurality of centrifugal weights arranged around a rotational axis of the movable sheave and being configured to axially move the movable sheave according to centrifugal force acting on the centrifugal weights in association with rotation of the drive shaft. The control unit controls the actuation of the actuator in such a manner that in a low ratio control area including a low ratio moving end of the movable sheave, the actuator is prohibited from providing thrust for moving the movable sheave to a side of a low ratio, and also in a top ratio control area including a top ratio moving end of the movable sheave, the actuator is prohibited from providing thrust for moving the movable sheave to a side of a top ratio.

Also, according to claim 1, the driven pulley is provided with a coil spring and a torque cam mechanism that provide thrust for moving the movable sheave to the side of the low ratio. In the low ratio control area, the thrust on the side of the low ratio generated by the coil spring and the torque cam mechanism is set to be higher than the thrust on the side of the top ratio generated by the centrifugal shift mechanism.

According to claim 2, the driven pulley is provided with the coil spring and the torque cam mechanism that provide the thrust for moving the movable sheave to the side of the low ratio. In the top ratio control area, the thrust on the side of the low ratio generated by the coil spring and the torque cam mechanism is set to be lower than the thrust on the side of the top ratio generated by the centrifugal shift mechanism.

Further, according to a preferred feature of the present invention, an end of the movable sheave when driven by the actuator in a top ratio direction in a movable area is set to be closer to the side of the low ratio than the top ratio moving end, and an end of the movable sheave when driven by the actuator in a low ratio direction in the movable area is set to be closer to the side of the top ratio than the low ratio moving end.

With the present invention, the thrust provided by the centrifugal mechanism in addition to the thrust provided by the actuator is applied to the movable sheave of the driving pulley. Thereby, the thrust required for the actuator can be reduced and the actuator can be miniaturized. Also, the movable sheave is prevented from being excessively moved by the thrust provided by the actuator toward the side of the low ratio moving end in the low ratio control area and the side of the top ratio moving end in the top ratio control area. For this reason, length of the movable margin can be shortened, and the V-belt continuously variable transmission can be miniaturized. Moreover, according to claim 1, in the low ratio control area, the thrust on the side of the low ratio generated by the coil spring and the torque cam mechanism is set to be higher than the thrust on the side of the top ratio generated by the centrifugal shift mechanism. As a result, the actuator provides only the thrust on the side of the top ratio in the low ratio control area, and the movable sheave is prevented from being excessively moved by the actuator toward the moving end on the side of the low ratio in the low ratio control area. For this reason, the length of the movable margin can be shortened, and the V-belt continuously variable transmission can be miniaturized. According to claim 2, in the top ratio control area, the thrust on the side of the low ratio generated by the coil spring and the torque cam mechanism is set to be lower than the thrust on the side of the top ratio generated by the centrifugal shift mechanism. As a result, the actuator provides only the thrust on the side of the low ratio in the top ratio control area, and the movable sheave is prevented from being excessively moved by the actuator toward the moving end on the side of the top ratio in the top ratio control area. For this reason, the length of the movable margin can be shortened, and the V-belt continuously variable transmission can be miniaturized.

Further, with the preferred feature of the present invention, an end of the movable sheave when driven by the actuator in a top ratio direction in a movable area is located closer to the side of the low ratio than the top ratio moving end, and an end of the movable sheave when driven by the actuator in a low ratio direction in the movable area is located closer to the side of the top ratio than the low ratio moving end. For this reason, even if the V-belt is worn, the movable margin is used, so that the movable area of the actuator can be maintained.

Further features and advantages of the invention will become apparent from the following description with reference to the annexed drawings wherein:
Fig. 1 is a left side view of a motorcycle,
Fig. 2 is an enlarged cross-sectional view taken along line 2-2 in Fig. 1,
Fig. 3 is a block diagram showing a control system for an actuator,
Fig. 4 is a diagram showing a first example of shift transmission characteristics set in a control unit,
Fig. 5 is an illustration for explaining the movement of a movable sheave in a vehicle speed region A1 in Fig. 4,
Fig. 6 is an illustration for explaining the movement of the movable sheave in a vehicle speed region B1 in Fig. 4,
Fig. 7 is an illustration for explaining the movement of the movable sheave in a boundary between a vehicle speed region C1 and a vehicle speed region D1 in Fig. 4,
Fig. 8 is an illustration for explaining the movement of the movable sheave in the vehicle speed region D1 in Fig. 4,
Fig. 9 is a diagram showing shift transmission characteristics when a V-belt is worn,
Fig. 10 is an illustration for explaining the movement of a movable sheave in a vehicle speed region C2 in Fig. 9,
Fig. 11 is an illustration for explaining the movement of the movable sheave in a vehicle speed region D2 in Fig. 9,
Fig. 12 is an illustration for explaining the movement of the movable sheave in a vehicle speed region E2 in Fig. 9,
Fig. 13 is a diagram showing a change in shift transmission characteristics shown in Fig. 9 with the V-belt worn, and
Fig. 14 is an illustration for explaining the movement of a movable sheave in a vehicle speed region E2 in Fig. 13.

Hereinafter, an embodiment of the present invention will be described with reference to accompanying drawings. Note that in the following explanation, directions such as front and rear, right and left, and upper and lower are directions when viewed from an occupant riding a motorcycle.

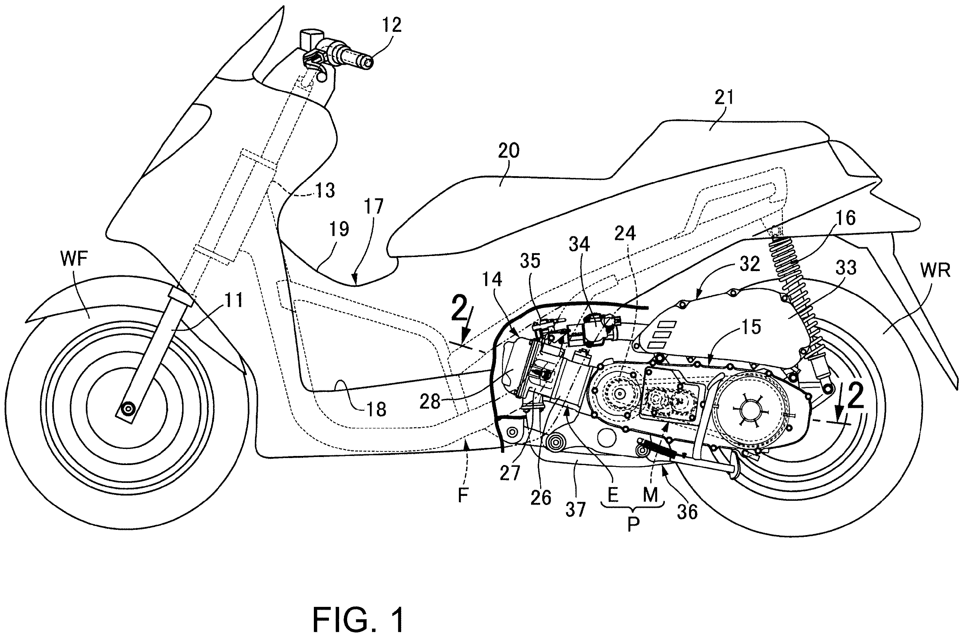

First, in Fig. 1, a vehicle body frame F of a scooter type motorcycle has a front end provided with a head pipe 13 steerably supporting a front fork 11 for pivotally supporting a front wheel WF and a steering handlebar 12 coupled to the front fork 11. A power unit P providing power for driving a rear wheel WR as a drive wheel is vertically swingably supported by an intermediate part of the vehicle body frame F in a longitudinal direction.

The power unit P is composed of an engine E arranged in front of the rear wheel WR, and a transmission M for transmitting output from the engine E to the rear wheel WR. The transmission M is stored in a transmission case 15 provided adjacently to an engine body 14 of the engine E and extending leftward of the rear wheel WR. A rear cushion unit 16 is provided between a rear part of the transmission case 15 and a rear part of the vehicle body frame F.

The vehicle body frame F and a part of the power unit P are covered with a vehicle body cover 17 having a pair of right and left footrests 18 for placing feet of an occupant and a floor tunnel part 19 raised upward between both the footrests 18. The vehicle body cover 17 is attached to the vehicle body frame F. Also, an occupant seat 20 arranged behind the floor tunnel part 19 and a pillion passenger seat 21 arranged behind the occupant seat 20 are disposed on the vehicle body cover 17.

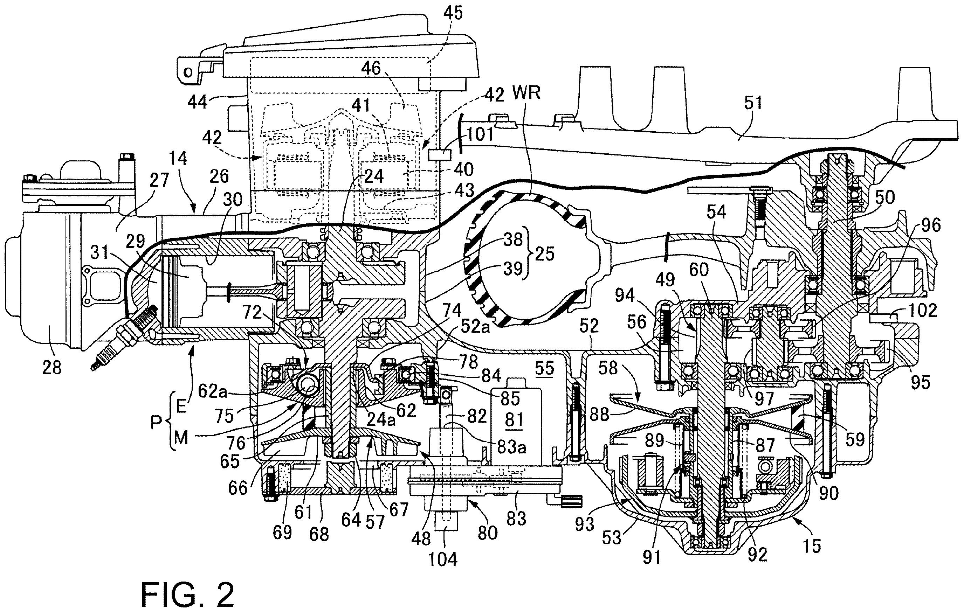

With reference to Fig. 2 together, the engine body 14 of the engine E is provided with a crankcase 25 that rotatably supports a crankshaft 24 having an axis extending in a vehicle width direction, a cylinder block 26 that has a cylinder bore 30 slidably fitting a piston 29 therein and that is joined to the crankcase 25, a cylinder head 27 that is joined to the cylinder block 26, and a head cover 28 that is joined to the cylinder head 27. A cylinder axis of the engine body 14, that is, an axis of the cylinder bore 30 is slightly inclined forwardly upward, and the piston 29 is linked to the crankshaft 24. Also, a combustion chamber 31 with a top part of the piston 29 facing is formed between the cylinder block 26 and the cylinder head 27.

Paying attention to Fig. 1, an intake device 32 for supplying air to the combustion chamber 31 is provided with an air cleaner 33 that is located on a left side of the rear wheel WR, disposed above the transmission case 15, and supported by the transmission case 15, and a throttle body 34 that is disposed between the air cleaner 33 and the cylinder head 27. A fuel injection valve 35 is attached to an upper wall of the cylinder head 27.

An exhaust system 36 for discharging exhaust gas from the combustion chamber 31 is connected to a lower wall of the cylinder head 27. The exhaust system 36 is provided with an exhaust pipe 37 that extends rearward below the engine body 14 from the lower wall of the cylinder head 27, and an exhaust muffler (not shown) that is arranged rightward of the rear wheel WR so as to be connected to a downstream end of the exhaust pipe 37.

The crankcase 25 is formed in such a manner that a first case half body 38 on a right side and a second case half body 39 on a left side are joined together. An outer rotor 40 is fixed to a right end of the crankshaft 24 rotatably penetrating through the first case half body 38, and an inner stator 41 surrounded by the outer rotor 40 so as to compose a generator 42 together with the outer rotor 40 is fixed to a support plate 43 fastened to the first case half body 38.

A cylindrical generator cover 44 for surrounding the generator 42 is joined to the first case half body 38, and a radiator 45 is disposed on a right side of the generator cover 44. A cooling fan 46 configured to allow cooling air to flow to the radiator 45 is fixed to the crankshaft 24 so as to be arranged between the generator 42 and the radiator 45.

The transmission M that transmits rotative power of the crankshaft 24 to a side of the rear wheel WR and that is stored in the transmission case 15 is provided with a V-belt continuously variable transmission 48 that shifts in a variable manner the rotative power transmitted from the crankshaft 24 as a drive shaft, and a speed reduction gear mechanism 49 that decelerates rotative power of the V-belt continuously variable transmission 48 and that transmits the decelerated rotative power to an axle 50 of the rear wheel WR. The rear wheel WR is arranged to be sandwiched between the transmission case 15 and a support arm 51 that is provided adjacently to the first case half body 38 of the crankcase 25 and that extends to the right side of the rear wheel WR. Both ends of the axle 50 are pivotally supported by the transmission case 15 and a rear end of the support arm 51 respectively.

The transmission case 15 is composed of a case main body 52 that integrally has the second case half body 39 and that extends rearward from a left wall of the crankcase 25 to a lateral side of the rear wheel WR, a case cover 53 that has a transmission chamber 55 storing the V-belt continuously variable transmission 48 and formed between the case cover 53 and the case main body 52 and that is fastened to the case main body 52, and a gear cover 54 that has a gear chamber 56 storing the speed reduction gear mechanism 49 and formed between the gear cover 54 and the case main body 52 and that is fastened to a rear part of the case main body 52.

The V-belt continuously variable transmission 48 is provided with a driving pulley 57 that is provided to the crankshaft 24 as the drive shaft with a belt winding diameter made variable, a driven pulley 58 that is provided to a driven shaft 60 arranged behind the crankshaft 24 and stored in the transmission case 15, and an endless V-belt 59 that is wound around the driving pulley 57 and the driven pulley 58.

The driving pulley 57 is composed of a fixed sheave 61 that is fixed to the crankshaft 24, and a movable sheave 62 that can approach and/or can be separated from the fixed sheave 61 in a direction along the axis of the crankshaft 24 and that is supported on the crankshaft 24. The movable sheave 62 is arranged closer to a side of the crankcase 25 than the fixed sheave 61.

An annular stepped part 24a that faces a side of the fixed sheave 61 is formed on an outer periphery of an intermediate part of the crankshaft 24 in an axial direction in the transmission chamber 55. A cylindrical sleeve 65 for surrounding the crankshaft 24 is interposed between the fixed sheave 61 and a weight retaining plate 74 for allowing an inner peripheral part to abut on the annular stepped part 24a. When a nut 64 screwed around the end of the crankshaft 24 on a side of the case cover 53 is fastened, the fixed sheave 61 and the weight retaining plate 74 are fixed to the crankshaft 24.

A fan 66 for allowing cooling air to flow into the transmission chamber 55 is provided integrally with the fixed sheave 61, and an opening 67 is formed in the case cover 53 correspondingly to the fan 66. On the other hand, a cleaner element 69 arranged to surround the opening 67 is sandwiched between the case cover 53 and a cover member 68 fastened to the case cover 53, and air outside of the transmission case 15 is passed through the cleaner element 69 and is sucked as the cooling air into the transmission chamber 55 from the opening 67.

The movable sheave 62 can be axially moved, is supported on the crankshaft 24 through the sleeve 65, and integrally has a bowl-shaped flange part 62a retaining the V-belt 59 between the movable sheave 62 and the fixed sheave 61. The movable sheave 62 can be moved between a low ratio moving end as a position separated farthest from the fixed sheave 61 with the winding diameter of the V-belt 59 around the driving pulley 57 minimized and a top ratio moving end as a position located closest to the fixed sheave 61 with the winding diameter of the V-belt 59 around the driving pulley 57 maximized.

A centrifugal shift mechanism 72 is annexed to the driving pulley 57. The centrifugal shift mechanism is configured to include a plurality of centrifugal weights 75 arranged around a rotational axis of the movable sheave 62 and is configured to axially move the movable sheave 62 according to centrifugal force acting on the centrifugal weights 75 in association with rotation of the crankshaft 24. The movable sheave 62 is driven to a side in order to be closer to the fixed sheave 61 according to an increase in rotational speed of the crankshaft 24 by operation of the centrifugal shift mechanism 72.

The centrifugal shift mechanism 72 is provided with a cam surface 76 that is formed on a side of the flange part 62a of the movable sheave 62 opposite to the fixed sheave 61, the weight retaining plate 74 that is fixed to the crankshaft 24 and that is opposed to the cam surface 76 from a side opposite to the movable sheave 62, and the plurality of centrifugal weights 75 that are retained between the cam surface 76 and the weight retaining plate 74. A plurality of portions in a peripheral direction of the inner periphery of the flange part 62a of the movable sheave 62 opposite to the fixed sheave 61 are held by a plurality of holding members 78 fitted to portions in the peripheral direction of an outer periphery of the weight retaining plate 74. The weight retaining plate 74 and the movable sheave 62 are rotated together with the crankshaft 24.
In the centrifugal shift mechanism 72 configured in this manner, the centrifugal weights 75 brought into rolling contact with the cam surface 76 are moved outward in a radial direction of the crankshaft 24 by an increase in centrifugal force acting in association with rotation of the crankshaft 24, so that the movable sheave 62 is moved to a side of the fixed sheave 61.
In addition to thrust provided by the centrifugal shift mechanism 72, the movable sheave 62 is driven in the axial direction of the crankshaft 24 also by thrust provided by an actuator 80. The actuator 80 has an electric motor 81, and an output rod 82 that is axially moved by power from the electric motor 81. A case 83 for the actuator is attached to an outer surface of the case cover 53 of the transmission case 15 so that the output rod 82 is moved in a direction in parallel with the axis of the crankshaft 24.
A coupling arm 85 is supported by the movable sheave 62 through a ball bearing 84. The output rod 82 is engaged with and coupled to the coupling arm 85. Movement of the output rod 82 in the axial direction is transmitted to the movable sheave 62.
With regard to the output rod 82, the moving end in a direction where the movable sheave 62 is driven to a side with a gear ratio of the V-belt continuously variable transmission 48 set to a low ratio is regulated in such a manner that the coupling arm 85 abuts on a regulation projecting part 52a provided to the case main body 52 of the transmission case 15. Also, with regard to the output rod 82, the moving end in the direction where the movable sheave 62 is driven to a side with the gear ratio of the V-belt continuously variable transmission 48 set to a top ratio is regulated in such a manner that the coupling arm 85 abuts on a regulation stepped part 83a formed on the case 83. Note that the movement of the output rod 82 to regulation ends in both directions is performed in order to confirm an initial position when starting the engine E. In a normal shift transmission range, the output rod 82 is not moved to the regulation ends in both the directions.

Also, in such a normal shift transmission control state that the movable sheave 62 is driven by the actuator 80, the end of the movable sheave 62 when driven by the actuator 80 in the top ratio direction in the movable area is set to be closer to the side of the low ratio than the top ratio moving end with the movable sheave 62 located closest to the fixed sheave 61, and the end of the movable sheave 62 when driven by the actuator 80 in the low ratio direction in the movable area is set to be closer to the side of the top ratio than the low ratio moving end with the movable sheave 62 separated farthest from the fixed sheave 61.

The driven pulley 58 is composed of a fixed sheave 88 that is fixed to a cylindrical inner cylinder 87 relatively rotatably supported by the driven shaft 60 while coaxially surrounding the driven shaft 60, and a movable sheave 90 that can be provided closer to and can be separated from the fixed sheave 88 in such a manner that the movable sheave 90 can be axially relatively moved and relatively rotated with respect to the inner cylinder 87 and is fixed to an outer cylinder 89 for axially surrounding the inner cylinder 87. The V-belt 59 is wound between the fixed sheave 88 and the movable sheave 90. Also, a torque cam mechanism 91 for allowing component force in the axial direction to act between both the sheaves 88, 90 according to a phase difference in relative rotation between the fixed sheave 88 and the movable sheave 90 is provided between the inner cylinder 87 and the outer cylinder 89. The movable sheave 90 is elastically urged toward the side of the fixed sheave 88 by a coil spring 92. A centrifugal clutch 93 brought into a state of transmitting the power as engine speed exceeds set rotational speed is provided between the fixed sheave 88 and the driven shaft 60.

Toward a side with the gear ratio of the V-belt continuously variable transmission 48 set to the low ratio, that is, toward a side with a winding diameter of the V-belt 59 around the driven pulley 58 increased, the torque cam mechanism 91 and the coil spring 92 provide the thrust that urges the movable sheave 90 toward the side of the fixed sheave 88 and that also urges the movable sheave 62 so as to separate the movable sheave from the fixed sheave 61. An interval in the axial direction between the fixed sheave 88 and the movable sheave 90 of the driven pulley 58 is determined by a balance between the thrust generated by the torque cam mechanism 91 and the coil spring 92 and the force from the V-belt 59 acting in a direction for keeping an interval between the fixed sheave 88 and the movable sheave 90. If the winding diameter of the V-belt 59 around the driving pulley 57 is increased, the winding diameter of the V-belt 59 around the driven pulley 58 is reduced.

On end of the driven shaft 60 liquid-tightly and rotatably penetrating through the case main body 52 is rotatably supported by the case cover 53, and the other end of the driven shaft 60 is rotatably supported by the gear cover 54. One end of the axle 50 of the rear wheel WR airtightly penetrates through the gear cover 54, and is entered into the gear chamber 56. The one end of the axle 50 is rotatably supported by the case main body 52 and the gear cover 54, and the other end of the axle 50 is rotatably supported by the support arm 51.

The speed reduction gear mechanism 49 is provided between the driven shaft 60 and the axle 50, and is stored in the gear chamber 56. The speed reduction gear mechanism 49 has a drive gear 94 that is provided integrally with the driven shaft 60 transmitted with the rotative power from the crankshaft 24 through the V-belt continuously variable transmission 48 and the centrifugal clutch 93, a final gear 95 provided to the axle 50 of the rear wheel WR, and a first idle gear 96 and a second idle gear 97 that are arranged between the drive gear 94 and the final gear 95.

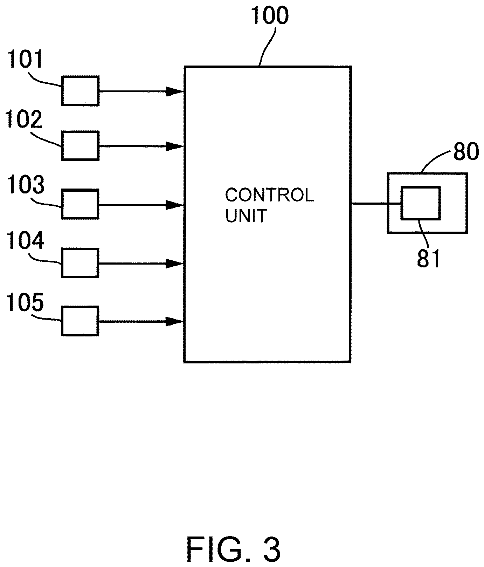

In Fig. 3, actuation of the electric motor 81 in the actuator 80 is controlled by a control unit 100. Into the control unit 100, the following detection values are input, that is, a detection value detected by a first rotational speed detector 101 attached to the generator cover 44 so as to be opposed to the outer periphery of the outer rotor 40 in the generator 42 in order to detect the rotational speed of the crankshaft 24, a detection value detected by a second rotational speed detector 102 attached to the gear cover 54 in the transmission case 15 in order to detect the rotational speed of the axle 50, a detection value detected by a throttle opening detector 103 for detecting a throttle opening of the engine E, and a detection value detected by an actuator action state detector 104 attached to the case 83 for the actuator 80 in order to detect an action state of the actuator 80. The control unit 100 is connected with gear ratio mode switching means 105 configured to switch by the occupant a plurality of gear ratio modes with shift patterns differing from each other, for example, a sport mode and a drive mode.

The control unit 100 calculates the engine speed based on the detection value detected by the first rotational speed detector 101, calculates the vehicle speed based on the detection value detected by the second rotational speed detector 102, and controls the actuation of the electric motor 81 in the actuator 80 according to the predetermined shift transmission characteristics based on the vehicle speed and the engine speed.

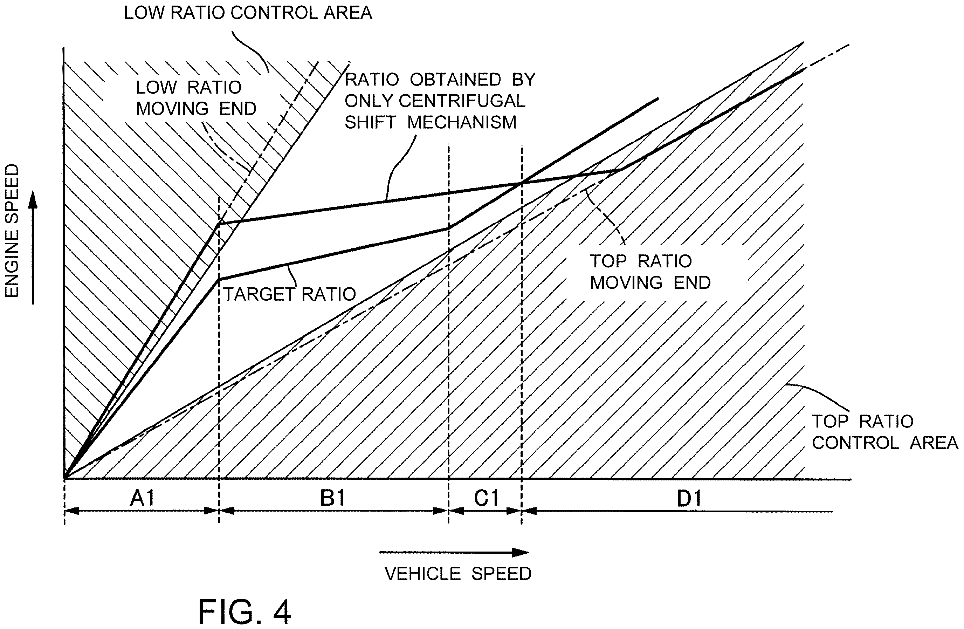

In Fig. 4, a low ratio control area including the low ratio moving end of the movable sheave 62 (an area shown by a number of rightwardly downward diagonals in Fig. 4), and a top ratio control area including the top ratio moving end of the movable sheave 62 (an area shown by a number of leftwardly downward diagonals in Fig. 4), are previously set in the control unit 100. The thrust on the side of the low ratio generated by the coil spring 92 and the torque cam mechanism 91 that are included in the driven pulley 58 of the V-belt continuously variable transmission 48 is set to be higher, in the low ratio control area, than the thrust on the side of the top ratio generated by the centrifugal shift mechanism 72, and is set to be lower, in the top ratio control area, than the thrust on the side of the top ratio generated by the centrifugal shift mechanism 72. Therefore, when the movable sheave 62 of the driving pulley 57 is driven by only the centrifugal shift mechanism 72, as shown in Fig. 4, the movable sheave 62 is located at the low ratio moving end in the low ratio control area, and the movable sheave 62 is located at the top ratio moving end in the top ratio control area. For this reason, the movable sheave 62 is moved between the low ratio moving end and the top ratio moving end in an intermediate vehicle speed state between the low ratio control area and the top ratio control area.

The control unit 100 is configured to control the actuation of the electric motor 81 in order to obtain a target ratio by adding the thrust provided by the actuator 80 in addition to the thrust provided by the centrifugal shift mechanism 72. In addition, the control unit 100 controls the actuation of the actuator 80 in such a manner that in the low ratio control area, the actuator 80 is prohibited from providing the thrust for moving the movable sheave 62 to the side of the low ratio, and also in the top ratio control area, the actuator 80 is prohibited from providing the thrust for moving the movable sheave 62 to the side of the top ratio.

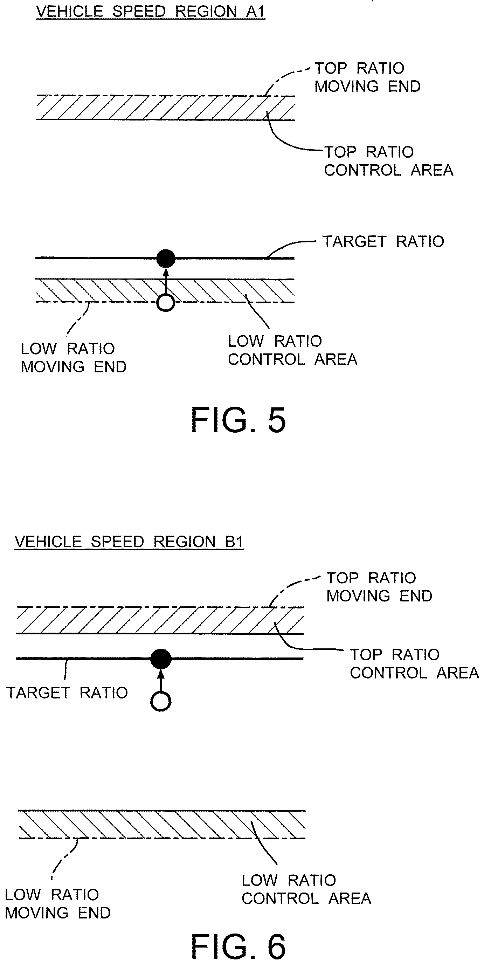

Here, in Fig. 4, an operating condition of the movable sheave 62 in the respective vehicle speed regions shown by reference signs A1, B1, C1, and D1 will be described using Fig. 5 to Fig. 8. Note that in drawings, an open circle (○) is indicative of a position of the movable sheave 62 determined by only the centrifugal shift mechanism 72, and a filled circle (●) is indicative of the position of the movable sheave 62 when driven by the actuator 80.

First, in the vehicle speed region A1, as shown in Fig. 5, by only the centrifugal shift mechanism 72, the actuator 80 provides the thrust for driving the movable sheave 62 toward the side of the top ratio so that the movable sheave 62 located at the low ratio moving end is moved to the side of the target ratio, and in the low ratio control area of the vehicle speed region A1, the actuator 80 does not provide the thrust for driving the movable sheave 62 toward the side of the low ratio.

Also, in the vehicle speed region B1, the target ratio is set to be closer to the side of the top ratio than the ratio obtained by determining the position of the movable sheave 62 by only the centrifugal shift mechanism 72. For this reason, as shown in Fig. 6, the actuator 80 provides the thrust for driving the movable sheave 62 toward the side of the top ratio so that the movable sheave 62 is moved to the side of the target ratio in the same manner as the vehicle speed region A1.

In the vehicle speed region C1 excluding the boundary with the vehicle speed region D1, in the same manner as the vehicle speed region B1, the target ratio is set to be closer to the side of the top ratio than the ratio obtained by determining the position of the movable sheave 62 by only the centrifugal shift mechanism 72. For this reason, the actuator 80 provides the thrust for driving the movable sheave 62 toward the side of the top ratio so that the movable sheave 62 is moved to the side of the target ratio.

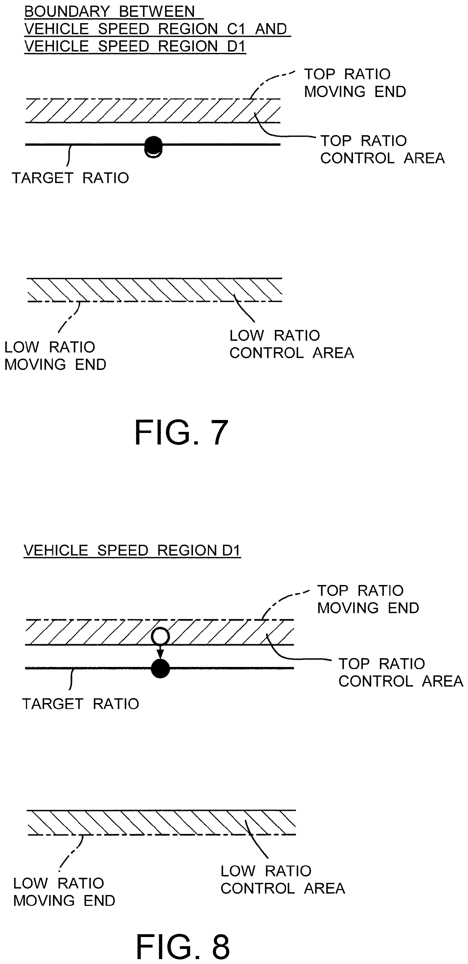

In the boundary between the vehicle speed region C1 and the vehicle speed region D1, as shown in Fig. 7, the thrust required for the target ratio at the top ratio and the thrust provided by the centrifugal shift mechanism 72 are balanced with each other, and the actuator 80 is not required to provide the thrust.

Further, in the vehicle speed region D1, as shown in Fig. 8, the actuator 80 provides the thrust for driving the movable sheave 62 toward the side of the low ratio so that the movable sheave 62 entered into the top ratio control area by only the centrifugal shift mechanism 72 is moved to the side of the target ratio. At this time, when the engine speed is increased, the thrust toward the side of the top ratio provided by the centrifugal shift mechanism 72 is increased. As a result, the thrust toward the side of the low ratio provided by the actuator 80 is increased.

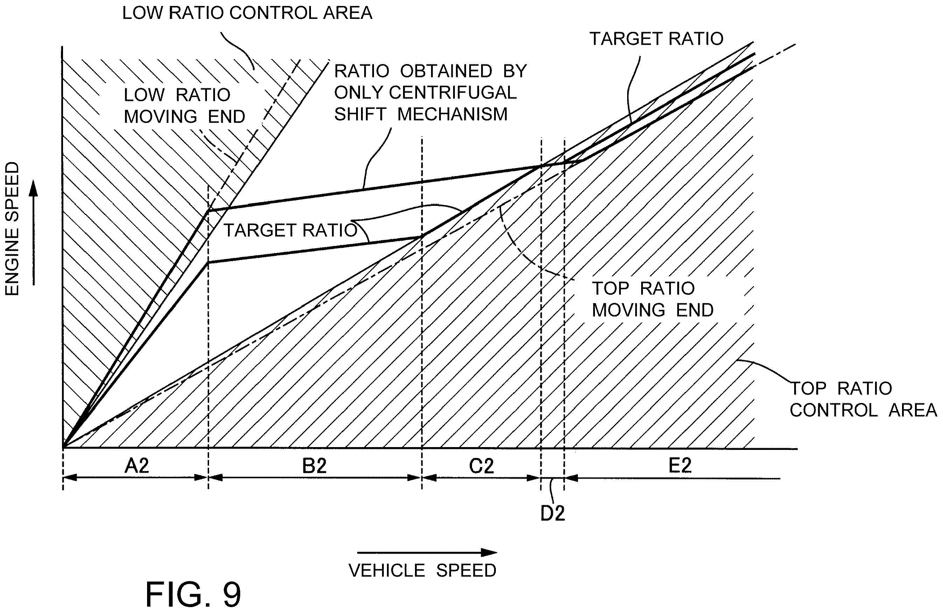

Fig. 9 is a diagram showing the shift transmission characteristics when the V-belt is worn. The operating condition of the movable sheave 62 in the respective vehicle speed regions shown by reference signs A2, B2, C2, D2 and E2 in Fig. 9 will be described. In the vehicle speed regions A2 and B2, in the same manner as the vehicle speed regions A1 and B1 of the shift transmission characteristics shown in Fig. 4, the movable sheave 62 is driven toward the side of the top ratio by the actuator 80.

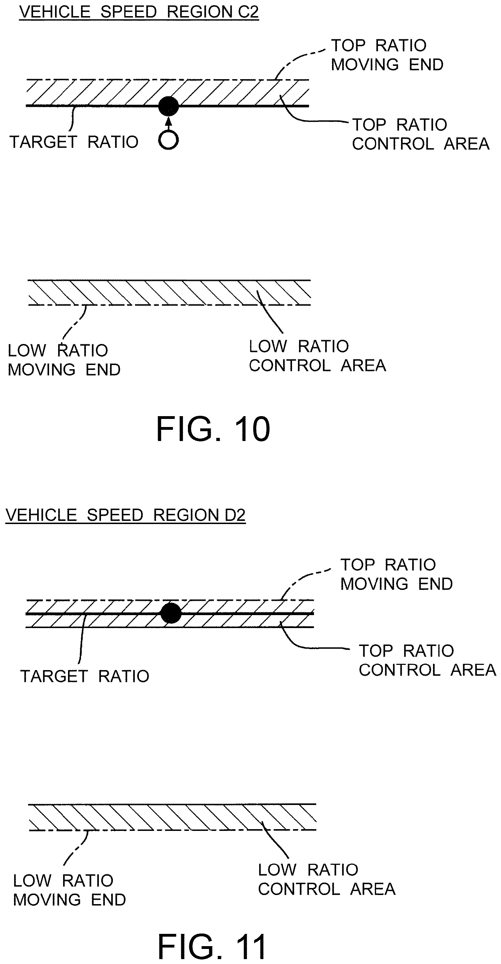

Also, in the vehicle speed region C2, the target ratio is located at the boundary in the top ratio control area. On the other hand, the position of the movable sheave 62 determined by only the centrifugal shift mechanism 72 is located closer to the side of the low ratio than the top ratio control area. For this reason, as shown in Fig. 10, the actuator 80 provides the thrust for driving the movable sheave 62 toward the side of the top ratio.

In the vehicle speed region D2, the ratio determined by only the centrifugal shift mechanism 72 and the target ratio coincide with each other in the top ratio control area. As shown in Fig. 11, the actuator 80 does not provide the thrust, and the position of the movable sheave 62 is determined by only the thrust provided by the centrifugal shift mechanism 72.

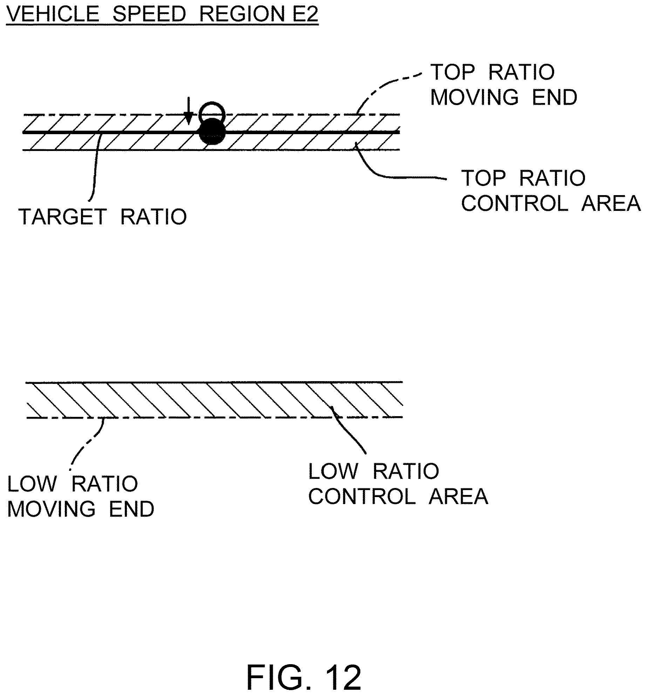

Further, in the vehicle speed region E2, although the target ratio is displaced to the side of the top ratio moving end by wear of the V-belt 59, the centrifugal shift mechanism 72 provides the thrust for moving the movable sheave 62 to the side of the top ratio moving end. As shown in Fig. 12, the actuator 80 provides such thrust that the movable sheave 62 is moved closer to the side of the low ratio than the top ratio moving end to thereby obtain the target ratio. In this state, when the engine speed is increased, the thrust provided by the centrifugal shift mechanism 72 is increased. Thereby, the actuator 80 drives the movable sheave 62 to the position for obtaining the target ratio while increasing the thrust.

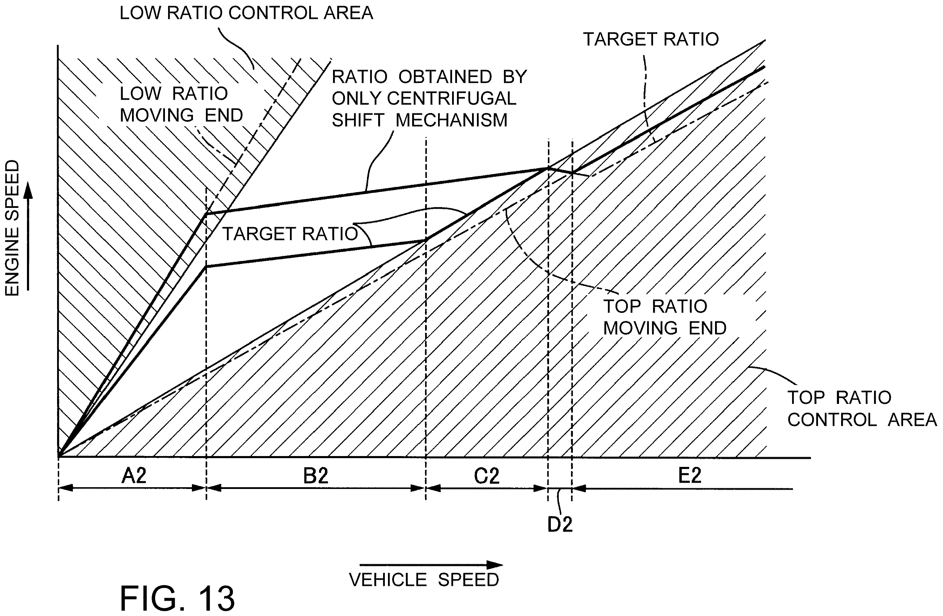

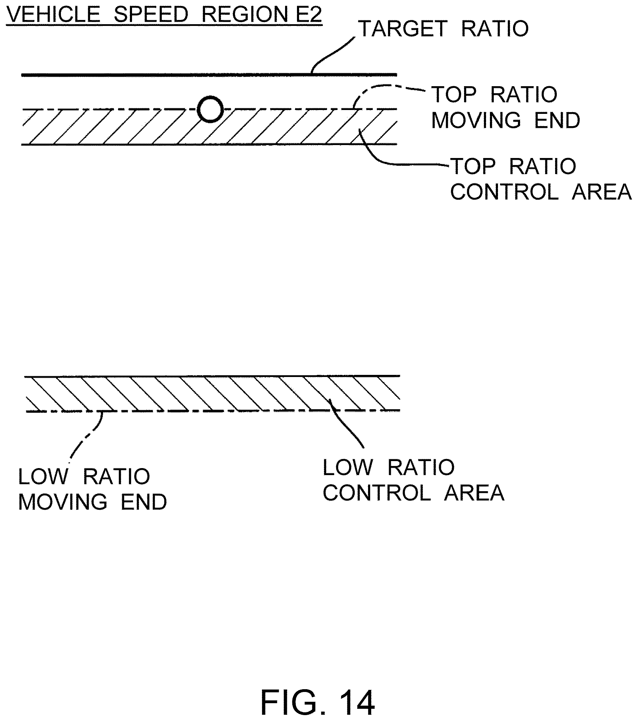

By the way, when the V-belt 59 is further worn, as shown in Fig. 13, in the vehicle speed region E2, the target ratio may be displaced closer to the side of the top ratio than the top ratio moving end in the top ratio control area. In this case, the centrifugal shift mechanism 72 provides the thrust for driving the movable sheave 62 to the side of the top ratio even if the movable sheave 62 reaches the top ratio moving end. However, as shown in Fig. 14, the movable sheave 62 is retained at the top ratio moving end, the actuator 80 does not provide the thrust, and it becomes impossible to reach the target ratio.

Next, action of the embodiment will be described. The centrifugal shift mechanism 72 is annexed to the driving pulley 57 of the V-belt continuously variable transmission 48. The centrifugal shift mechanism is configured to include the plurality of centrifugal weights 75 arranged around the rotational axis of the movable sheave 62 as a part of the driving pulley 57 and is also configured to axially move the movable sheave 62 according to the centrifugal force acting on the centrifugal weights 75 in association with the rotation of the crankshaft 24. Thereby, the thrust provided by the centrifugal shift mechanism 72 in addition to the thrust provided by the actuator 80 can be applied to the movable sheave 62. For this reason, the thrust required for the actuator 80 can be reduced, and the actuator 80 can be miniaturized.

In addition, the control unit 100 controls the actuation of the actuator 80 in such a manner that in the low ratio control area including the low ratio moving end of the movable sheave 62, the actuator 80 is prohibited from providing the thrust for moving the movable sheave 62 to the side of the low ratio, and also in the top ratio control area including the top ratio moving end of the movable sheave 62, the actuator 80 is prohibited from providing the thrust for moving the movable sheave 62 to the side of the top ratio. As a result, the movable sheave 62 is prevented from being excessively moved by the thrust provided by actuator 80 toward the side of the low ratio moving end in the low ratio control area and the side of the top ratio moving end in the top ratio control area. For this reason, the length of the movable margin can be shortened, and the V-belt continuously variable transmission 48 can be miniaturized.

Also, the driven pulley 58 of the V-belt continuously variable transmission 48 is provided with the coil spring 92 and the torque cam mechanism 91 that provide the thrust for moving the movable sheave 62 to the side of the low ratio, and in the low ratio control area, the thrust on the side of the low ratio generated by the coil spring 92 and the torque cam mechanism 91 is set to be higher than the thrust on the side of the top ratio generated by the centrifugal shift mechanism 72. For this reason, in the low ratio control area, the actuator 80 provides only the thrust on the side of the top ratio, the movable sheave 62 is prevented form being excessively moved toward the moving end on the side of the low ratio by the actuator 80 in the low ratio control area, the length of the movable margin can be shortened, and the V-belt continuously variable transmission 48 can be miniaturized.

Also, in the top ratio control area, the thrust on the side of the low ratio generated by the coil spring 92 and the torque cam mechanism 91 is set to be lower than the thrust on the side of the top ratio generated by the centrifugal shift mechanism 72. For this reason, the actuator 80 provides only the thrust on the side of the low ratio in the top ratio control area, the movable sheave 62 is prevented from being excessively moved toward the moving end on the side of the top ratio by the actuator 80 in the top ratio control area, the length of the movable margin can be shortened, and the V-belt continuously variable transmission 48 can be miniaturized.

Further, the end of the movable sheave 62 when driven by the actuator 80 in the top ratio direction in the movable area is set to be closer to the side of the low ratio than the top ratio moving end, and the end of the movable sheave 62 when driven by the actuator 80 in the low ratio direction in the movable area is set to be closer to the side of the top ratio than the low ratio moving end. For this reason, even if the V-belt 59 is worn, the movable area of the actuator 80 can be retained.

Although the embodiments of the present invention have been described as above, the prevent invention is not limited to the above-mentioned embodiments, and various design modifications may be made within the scope not departing from the subject matter of the invention in claims.

### Main Reference Signs

- 24: Crankshaft as drive shaft
- 48: V-belt continuously variable transmission
- 57: Driving pulley
- 58: Driven pulley
- 59: V-belt
- 60: Driven shaft
- 61: Fixed sheave
- 62: Movable sheave
- 72: Centrifugal shift mechanism
- 75: Centrifugal weight
- 80: Actuator
- 91: Torque cam mechanism
- 92: Coil spring
- 100: Control unit
- E: Engine
- WR: Rear wheel as drive wheel

## Claims

1. A vehicle V-belt continuously variable transmission comprising:
a driving pulley (57) that has a fixed sheave (61) fixed to a drive shaft (24) transmitted with power from an engine (E) mounted on a vehicle, and a movable sheave (62) supported on the drive shaft (24) in order to be axially relatively moved and not to be relatively rotated and arranged oppositely to the fixed sheave (61);
a driven pulley (58) that is arranged to a driven shaft (60) interlocked with and coupled to a drive wheel (WR);
a V-belt (59) that is wound around the driving pulley (57) and the driven pulley (58);
an actuator (80) that axially drives the movable sheave (62); and
a control unit (100) that controls actuation of the actuator (80),
wherein a centrifugal shift mechanism (72) is annexed to the driving pulley (57), the centrifugal shift mechanism being configured to include a plurality of centrifugal weights (75) arranged around a rotational axis of the movable sheave (62) and being configured to axially move the movable sheave (62) according to centrifugal force acting on the centrifugal weights (75) in association with rotation of the drive shaft (24), and
the control unit (100) controls the actuation of the actuator (80) in such a manner that in a low ratio control area including a low ratio moving end of the movable sheave (62), the actuator (80) is prohibited from providing thrust for moving the movable sheave (62) to a side of a low ratio, and also in a top ratio control area including a top ratio moving end of the movable sheave (62), the actuator (80) is prohibited from providing thrust for moving the movable sheave (62) to a side of a top ratio;
the vehicle V-belt continuously variable transmission being **characterized in that** the driven pulley (58) is provided with a coil spring (92) and a torque cam mechanism (91) that provide thrust for moving the movable sheave (62) to the side of the low ratio, and
in the low ratio control area, the thrust on the side of the low ratio generated by the coil spring (92) and the torque cam mechanism (91) is set to be higher than the thrust on the side of the top ratio generated by the centrifugal shift mechanism (72).

2. A vehicle V-belt continuously variable transmission comprising:
a driving pulley (57) that has a fixed sheave (61) fixed to a drive shaft (24) transmitted with power from an engine (E) mounted on a vehicle, and a movable sheave (62) supported on the drive shaft (24) in order to be axially relatively moved and not to be relatively rotated and arranged oppositely to the fixed sheave (61);
a driven pulley (58) that is arranged to a driven shaft (60) interlocked with and coupled to a drive wheel (WR);
a V-belt (59) that is wound around the driving pulley (57) and the driven pulley (58);
an actuator (80) that axially drives the movable sheave (62); and
a control unit (100) that controls actuation of the actuator (80),
wherein a centrifugal shift mechanism (72) is annexed to the driving pulley (57), the centrifugal shift mechanism being configured to include a plurality of centrifugal weights (75) arranged around a rotational axis of the movable sheave (62) and being configured to axially move the movable sheave (62) according to centrifugal force acting on the centrifugal weights (75) in association with rotation of the drive shaft (24), and
the control unit (100) controls the actuation of the actuator (80) in such a manner that in a low ratio control area including a low ratio moving end of the movable sheave (62), the actuator (80) is prohibited from providing thrust for moving the movable sheave (62) to a side of a low ratio, and also in a top ratio control area including a top ratio moving end of the movable sheave (62), the actuator (80) is prohibited from providing thrust for moving the movable sheave (62) to a side of a top ratio;
the vehicle V-belt continuously variable transmission being **characterized in that** the driven pulley (58) is provided with the coil spring (92) and the torque cam mechanism (91) that provide the thrust for moving the movable sheave (62) to the side of the low ratio, and
in the top ratio control area, the thrust on the side of the low ratio generated by the coil spring (92) and the torque cam mechanism (91) is set to be lower than the thrust on the side of the top ratio generated by the centrifugal shift mechanism (72).

3. The vehicle V-belt continuously variable transmission according to claim 1,
wherein the driven pulley (58) is provided with the coil spring (92) and the torque cam mechanism (91) that provide the thrust for moving the movable sheave (62) to the side of the low ratio, and
in the top ratio control area, the thrust on the side of the low ratio generated by the coil spring (92) and the torque cam mechanism (91) is set to be lower than the thrust on the side of the top ratio generated by the centrifugal shift mechanism (72).

4. The vehicle V-belt continuously variable transmission according to any one of the preceding claims,
wherein an end of the movable sheave (62) when driven by the actuator (80) in a top ratio direction in a movable area is set to be closer to the side of the low ratio than the top ratio moving end, and
an end of the movable sheave (62) when driven by the actuator (80) in a low ratio direction in the movable area is set to be closer to the side of the top ratio than the low ratio moving end.

## Patentansprüche

1. Stufenloses Fahrzeug-Keilriemengetriebe, mit:
einer Antriebsscheibe (57), die eine feste Scheibe (61), die an einer Antriebswelle (24) befestigt ist, auf die eine Leistung von einem Motor (E) übertragen wird, der an einem Fahrzeug montiert ist, und eine bewegliche Scheibe (62) aufweist, die auf der Antriebswelle (24) derart gelagert ist, dass sie sich axial relativ bewegt und sich nicht relativ dreht, und die gegenüber der festen Scheibe (61) angeordnet ist;
einer Abtriebsscheibe (58), die an einer Abtriebswelle (60) angeordnet ist, die mit einem Antriebsrad (WR) verriegelt und gekoppelt ist;
einem Keilriemen (59), der um die Antriebsscheibe (57) und die Abtriebsscheibe (58) gewickelt ist;
einem Aktuator (80), der die bewegliche Scheibe (62) axial antreibt; und
einer Steuereinheit (100), die eine Betätigung des Aktuators (80) steuert,
bei dem ein Zentrifugal-Umschaltmechanismus (72) mit der Antriebsscheibe (57) verknüpft ist, wobei der Zentrifugal-Umschaltmechanismus derart ausgebildet ist, dass er eine Vielzahl von Fliehgewichten (75) aufweist, die um eine Drehachse der beweglichen Scheibe (62) herum angeordnet sind, und derart ausgebildet ist, dass er die bewegliche Scheibe (62) in Übereinstimmung mit einer Zentrifugalkraft axial bewegt, die auf die Fliehgewichte (75) in Verbindung mit einer Drehung der Antriebswelle (24) wirkt, und
die Steuereinheit (100) die Betätigung des Aktuators (80) auf solch eine Art und Weise steuert, dass in einem Steuergebiet einer geringen Übersetzung, das ein geringe-Übersetzung-Bewegungsende der beweglichen Scheibe (62) aufweist, der Aktuator (80) daran gehindert wird, eine Schubkraft zum Bewegen der beweglichen Scheibe (62) zu einer Seite einer geringen Übersetzung vorzusehen, und auch in einem Steuergebiet einer hohen Übersetzung, das ein hohe-Übersetzung-Bewegungsende der beweglichen Scheibe (62) aufweist, der Aktuator (80) daran gehindert wird, eine Schubkraft zum Bewegen der beweglichen Scheibe (62) zu einer Seite einer hohen Übersetzung vorzusehen;
wobei das stufenlose Fahrzeug-Keilriemengetriebe **dadurch gekennzeichnet ist, dass** die Abtriebsscheibe (58) mit einer Spiralfeder (92) und einem Drehmoment-Nockenmechanismus (91) versehen ist, die eine Schubkraft zum Bewegen der beweglichen Scheibe (62) zu der Seite der geringen Übersetzung vorsehen, und
in dem Steuergebiet der geringen Übersetzung die Schubkraft auf der Seite der geringen Übersetzung, die von der Spiralfeder (92) und dem Drehmoment-Nockenmechanismus (91) erzeugt wird, derart festgelegt ist, dass sie größer als die Schubkraft auf der Seite der hohen Übersetzung ist, die durch den Zentrifugal-Umschalt-mechanismus (72) erzeugt wird.

2. Stufenloses Fahrzeug-Keilriemengetriebe, mit:
einer Antriebsscheibe (57), die eine feste Scheibe (61), die an einer Antriebswelle (24) befestigt ist, auf die eine Leistung von einem Motor (E) übertragen wird, der an einem Fahrzeug montiert ist, und eine bewegliche Scheibe (62) aufweist, die auf der Antriebswelle (24) derart gelagert ist, dass sie sich axial relativ bewegt und sich nicht relativ dreht, und die gegenüber der festen Scheibe (61) angeordnet ist;
einer Abtriebsscheibe (58), die an einer Abtriebswelle (60) angeordnet ist, die mit einem Antriebsrad (WR) verriegelt und gekoppelt ist;
einem Keilriemen (59), der um die Antriebsscheibe (57) und die Abtriebsscheibe (58) gewickelt ist;
einem Aktuator (80), der die bewegliche Scheibe (62) axial antreibt; und
einer Steuereinheit (100), die eine Betätigung des Aktuators (80) steuert,
bei dem ein Zentrifugal-Umschaltmechanismus (72) mit der Antriebsscheibe (57) verknüpft ist, wobei der Zentrifugal-Umschaltmechanismus derart ausgebildet ist, dass er eine Vielzahl von Fliehgewichten (75) aufweist, die um eine Drehachse der beweglichen Scheibe (62) herum angeordnet sind, und derart ausgebildet ist, dass er die bewegliche Scheibe (62) in Übereinstimmung mit einer Zentrifugalkraft axial bewegt, die auf die Fliehgewichte (75) in Verbindung mit einer Drehung der Antriebswelle (24) wirkt, und
die Steuereinheit (100) die Betätigung des Aktuators (80) auf solch eine Art und Weise steuert, dass in einem Steuergebiet einer geringen Übersetzung, das ein geringe-Übersetzung-Bewegungsende der beweglichen Scheibe (62) aufweist, der Aktuator (80) daran gehindert wird, eine Schubkraft zum Bewegen der beweglichen Scheibe (62) zu einer Seite einer geringen Übersetzung vorzusehen, und auch in einem Steuergebiet einer hohen Übersetzung, das ein hohe-Übersetzung-Bewegungsende der beweglichen Scheibe (62) aufweist, der Aktuator (80) daran gehindert wird, eine Schubkraft zum Bewegen der beweglichen Scheibe (62) zu einer Seite einer hohen Übersetzung vorzusehen;
wobei das stufenlose Fahrzeug-Keilriemengetriebe **dadurch gekennzeichnet ist, dass** die Abtriebsscheibe (58) mit einer Spiralfeder (92) und einem Drehmoment-Nockenmechanis-mus (91) versehen ist, die die Schubkraft zum Bewegen der beweglichen Scheibe (62) zu der Seite des geringen Verhältnisses vorsehen, und
in dem Steuergebiet einer hohen Übersetzung die Schubkraft auf der Seite der geringen Übersetzung, die von der Spiralfeder (92) und dem Drehmoment-Nockenmechanismus (91) erzeugt wird, derart festgelegt ist, dass sie geringer als die Schubkraft auf der Seite der hohen Übersetzung ist, die von dem Zentrifugal-Umschaltmechanismus (72) erzeugt wird.

3. Stufenloses Fahrzeug-Keilriemengetriebe nach Anspruch 1,
bei dem die Abtriebsscheibe (58) mit der Spiralfeder (92) und dem Drehmoment-Nockenmechanismus (91) versehen ist, die die Schubkraft zum Bewegen der beweglichen Scheibe (62) zu der Seite der geringen Übersetzung vorsehen, und
in dem Steuergebiet der hohen Übersetzung die Schubkraft auf der Seite der geringen Übersetzung, die von der Spiralfeder (92) und dem Drehmoment-Nockenmechanismus (91) erzeugt wird, derart festgelegt ist, dass sie geringer als die Schubkraft auf der Seite der hohen Übersetzung ist, die von dem Zentrifugal-Umschaltmechanismus (72) erzeugt wird.

4. Stufenloses Fahrzeug-Keilriemengetriebe nach einem der vorhergehenden Ansprüche,
bei dem ein Ende der beweglichen Scheibe (62), wenn von dem Aktuator (80) in einem beweglichen Gebiet in einer Richtung einer hohen Übersetzung angetrieben, derart festgelegt ist, dass es näher an der Seite einer geringen Übersetzung ist als das hohe-Übersetzung-Bewegungsende, und
ein Ende der beweglichen Scheibe (62), wenn von dem Aktuator (80) in dem beweglichen Gebiet in einer Richtung einer geringeren Übersetzung angetrieben, derart festgelegt ist, dass es näher an der Seite einer hohen Übersetzung ist als das geringe-Übersetzung-Bewegungsende.

## Revendications

1. Transmission variable en continu à courroie en V de véhicule comprenant :
une poulie d'entraînement (57) qui a une partie de poulie fixe (61) fixée à un arbre d'entraînement (24) recevant la puissance d'un moteur (E) monté sur un véhicule, et une partie de poulie mobile (62) montée sur l'arbre d'entraînement (24) de façon à pouvoir, par rapport à lui, être déplacée axialement et ne pas être mise en rotation, et agencée à l'opposé de la partie de poulie fixe (61) ;
une poulie entraînée (58) qui est agencée sur un arbre entraîné (60) emboîté avec et couplé à une roue motrice (WR) ;
une courroie en V (59) qui est enroulée autour de la poulie d'entraînement (57) et de la poulie entraînée (58) ;
un actionneur (80) qui entraîne axialement la partie de poulie mobile (62) ; et
une unité de commande (100) qui commande l'actionnement de l'actionneur (80),
dans laquelle un mécanisme de boîte de vitesses centrifuge (72) est annexé à la poulie d'entraînement (57), le mécanisme de boîte de vitesses centrifuge étant configuré pour inclure une pluralité de poids centrifuges (75) agencés autour d'un axe de rotation de la partie de poulie mobile (62) et étant configurés pour déplacer axialement la partie de poulie mobile (62) selon une force centrifuge agissant sur les poids centrifuges (75) en association avec la rotation de l'arbre d'entraînement (24), et
l'unité de commande (100) commande l'actionnement de l'actionneur (80) de sorte que, dans une zone de commande en rapport bas comportant un déplacement extrémal en rapport bas de la partie de poulie mobile (62), il est interdit à l'actionneur (80) de fournir une poussée pour déplacer la partie de poulie mobile (62) vers un côté de rapport bas, et également, dans une zone de commande en rapport haut comportant un déplacement extrémal en rapport haut de la partie de poulie mobile (62), il est interdit à l'actionneur (80) de fournir une poussée pour déplacer la partie de poulie mobile (62) vers un côté de rapport haut ;
la transmission variable en continu à courroie en V de véhicule étant **caractérisée en ce que** la poulie entraînée (58) est dotée d'un ressort hélicoïdal (92) et d'un mécanisme de couplage à came (91) qui fournissent une poussée pour déplacer la partie de poulie mobile (62) vers le côté du rapport bas, et dans la zone de commande en rapport bas, la poussée du côté du rapport bas générée par le ressort hélicoïdal (92) et le mécanisme de couplage à cames (91) est réglée pour être supérieure à la poussée du côté du rapport haut générée par le mécanisme de boîte de vitesses centrifuge (72).

2. Transmission variable en continu à courroie en V de véhicule comprenant :
une poulie d'entraînement (57) qui a une partie de poulie fixe (61) fixée à un arbre d'entraînement (24) recevant la puissance d'un moteur (E) monté sur un véhicule, et une partie de poulie mobile (62) montée sur l'arbre d'entraînement (24) de façon à pouvoir, par rapport à lui, être déplacée axialement et ne pas être mise en rotation, et agencée à l'opposé de la partie de poulie fixe (61) ;
une poulie entraînée (58) qui est agencée sur un arbre entraîné (60) emboîté avec et couplé à une roue motrice (WR) ;
une courroie en V (59) qui est enroulée autour de la poulie d'entraînement (57) et de la poulie entraînée (58) ;
un actionneur (80) qui entraîne axialement la partie de poulie mobile (62) ; et
une unité de commande (100) qui commande l'actionnement de l'actionneur (80),
dans laquelle un mécanisme de boîte de vitesses centrifuge (72) est annexé à la poulie d'entraînement (57), le mécanisme de boîte de vitesses centrifuge étant configuré pour inclure une pluralité de poids centrifuges (75) agencés autour d'un axe de rotation de la partie de poulie mobile (62) et étant configurés pour déplacer axialement la partie de poulie mobile (62) selon une force centrifuge agissant sur les poids centrifuges (75) en association avec la rotation de l'arbre d'entraînement (24), et
l'unité de commande (100) commande l'actionnement de l'actionneur (80) de sorte que, dans une zone de commande en rapport bas comportant un déplacement extrémal en rapport bas de la partie de poulie mobile (62), il est interdit à l'actionneur (80) de fournir une poussée pour déplacer la partie de poulie mobile (62) vers un côté de rapport bas, et également, dans une zone de commande en rapport haut comportant un déplacement extrémal en rapport haut de la partie de poulie mobile (62), il est interdit à l'actionneur (80) de fournir une poussée pour déplacer la partie de poulie mobile (62) vers un côté de rapport haut ;
la transmission variable en continu à courroie en V de véhicule étant **caractérisée en ce que** la poulie entraînée (58) est dotée du ressort hélicoïdal (92) et du mécanisme de couplage à cames (91) qui fournissent la poussée pour déplacer la partie de poulie mobile (62) vers le côté du rapport bas, et
dans la zone de commande en rapport haut, la poussée du côté du rapport bas générée par le ressort hélicoïdal (92) et le mécanisme de couplage à came (91) est réglée pour être inférieure à la poussée du côté du rapport haut générée par le mécanisme de boîte de vitesses centrifuge (72).

3. Transmission variable en continu à courroie en V de véhicule selon la revendication 1,
dans laquelle la poulie entraînée (58) est dotée du ressort hélicoïdal (92) et du mécanisme de couplage à came (91) qui fournissent la poussée pour déplacer la partie de poulie mobile (62) vers le côté du rapport bas, et
dans la zone de commande en rapport haut, la poussée du côté du rapport bas générée par le ressort hélicoïdal (92) et le mécanisme de couplage à came (91) est réglée pour être inférieure à la poussée du côté du rapport haut générée par le mécanisme de boîte de vitesses centrifuge (72).

4. Transmission variable en continu à courroie en V de véhicule selon l'une quelconque des revendications précédentes,
dans laquelle une extrémité de la partie de poulie mobile (62) lorsqu'elle est entraînée par l'actionneur (80) en direction du rapport haut dans une zone de déplacement, est réglée pour être plus proche du côté du rapport bas que du déplacement extrémal en rapport haut, et
une extrémité de la partie de poulie mobile (62), lorsqu'elle est entraînée par l'actionneur (80) en direction du rapport bas dans la zone de déplacement, est réglée pour être plus proche du côté du rapport haut que du déplacement extrémal en rapport bas.
